# EUROPÄISCHE PATENTSCHRIFT

(11) **EP 3 183 323 B1**
(45) Veröffentlichungstag und Bekanntmachung des Hinweises auf die Patenterteilung: **30.01.2019**
(21) Anmeldenummer: 15748218.3
(22) Anmeldetag: 04.08.2015
(51) Int. Cl.: C10M 125/26, F16C 33/66, F16C 19/52, F16C 33/64

(54) **WÄLZLAGER UND VERFAHREN ZUR HERSTELLUNG SOWIE REPARATUR VON WÄLZLAGERN**
ROLLER BEARING AND METHOD FOR PRODUCTION AND REPAIR OF ROLLER BEARINGS
PALIER À ROULEAUX ET PROCÉDÉ DE FABRICATION AINSI QUE DE RÉPARATION DE PALIERS À ROULEAUX

(30) Priorität: 22.08.2014 DE 102014216691
(43) Veröffentlichungstag der Anmeldung: 28.06.2017
(73) Patentinhaber: Aktiebolaget SKF, 415 50 Göteborg (SE)
(72) Erfinder: HAAG, Cornelia, 97633 Aubstadt (DE); KOEHLER, Yvonne, 97070 Würzburg (DE); KORBACHER, Kerstin, 97537 Wipfeld (DE); KUNKEL, Verena, 97469 Gochsheim (DE); MANTEI, Franziska, 97855 Triefenstein (DE); TOPALOGLU, Ilim, 97421 Schweinfurt (DE); WARMUTH, Marion, 97456 Hambach (DE)
(74) Vertreter: Kuhstrebe, Jochen
(86) Internationale Anmeldenummer: PCT/EP2015/067914
(87) Internationale Veröffentlichungsnummer: WO 2016/026686

(56) Entgegenhaltungen:
- DE-A1-102004 063 835
- JP-A- 2003 313 573
- JP-A- 2012 251 616
- US-A- 4 402 838
- US-A- 4 532 055
- US-A1- 2004 198 891
- US-A1- 2011 044 572
- DATABASE WPI Week 200671 Thomson Scientific, London, GB; AN 2006-685804 XP002750648, & RU 2 277 577 C1 (GONCHARENKO YU V) 10. Juni 2006 (2006-06-10)

## Beschreibung

Die Erfindung betrifft ein Wälzlager mit einem Schmiermittel und ein Verfahren zur Herstellung sowie Reparatur von Wälzlagern.

Lager ermöglichen die Verbindung zweier Objekte unter Beibehaltung eines rotatorischen Freiheitsgrads, so dass die Objekte relativ zueinander eine Verschwenkung oder Rotation durchführen können. Bei Wälzlagern wird diese Funktion durch Wälzkörper, die zwischen zwei Laufflächen drehbar gehalten sind, gewährleistet.

Wälzlager gibt es in axialer sowie radialer Bauweise. Axiale Wälzlager weisen eine erste Lagerschale mit einer ersten Lauffläche und eine zweite Lagerschale mit einer zweiten Lauffläche auf, wobei die Lagerschalen um eine gemeinsame Rotationsachse, die im Wesentlichen einer Flächennormalen der Lagerschalen entspricht, relativ zueinander drehbar sind und wobei die erste Lauffläche der zweiten Lauffläche gegenüber angeordnet ist. Radiale Wälzlager weisen einen inneren Lagerring mit einer radial nach außen weisenden ersten Lauffläche und einen äußeren Lagerring mit einer radial nach innen zum inneren Lagerring weisenden zweiten Lauffläche auf. Eine Rotationsachse des Lagers verläuft durch die Mittelpunkte der zwei Lagerringe. Zur Vermeidung von Verlusten durch Reibung sowie zur Verlängerung der Lebensdauer eines Wälzlagers ist es von Vorteil, wenn die Oberflächen der Laufflächen sowie der Wälzkörper eine möglichst geringe Rauheit aufweisen.

Zur Herstellung von Lagerkomponenten, wie z.B. Lagerringen von Wälzlagern mit Laufflächen für die Wälzkörper, wird Rohmaterial, z.B. rohr- oder stangenförmiges Rohmaterial, z.B. aus 100Cr6, zunächst durch spanabhebende Verfahren, wie z.B. Drehen oder Feindrehen, oder durch umformende Verfahren, wie z.B. Schmieden, Tiefziehen oder Rollen, zu einem ringförmigen Rohling verarbeitet und anschließend einer Wärmebehandlung unterzogen. Eine verbreitete Wärmebehandlung ist dreistufig und umfasst z.B. eine Austenitisierung bei ca. 850 °C, Einsatzhärten bei 40 °C und Vergüten bei ca. 170 °C. In folgenden Arbeitsflächen werden die Flächen des Lagerrings bzw. der Lagerscheibe geschliffen und ggf. durch Feinschleifen, Honen und/oder Polieren weiter geglättet.

Standardmäßige Verfahren zur Herstellung von Lagerringen bzw. Lagerscheiben haben den Nachteil, dass zur Erzielung niedriger Oberflächenrauheiten sehr hohe Fertigungskosten sowie lange Fertigungszeiten entstehen, da die hierfür erforderlichen Arbeitsschritte des Feinschleifens, Honens und/oder Polierens einen besonderen Fertigungsaufwand bedeuten.

Wälzlager unterliegen je nach Verwendungsart einem mehr oder wenig stark ausgeprägtem Verschleiß, da sie eine reibungsbehaftete Relativbewegung von zwei Objekten ermöglichen. Insbesondere bei einer exzentrischen oder stoßartigen Belastung sowie bei Verwendung von zu wenig Schmiermittel oder bei Eintritt von harten Fremdkörpern in das Wälzlager tritt verstärkt Verschleiß am Wälzlager auf. Durch Verschleiß werden z.B. Partikel von den Oberflächen der Laufflächen und der Wälzkörper abgelöst und somit die Rauheit dieser Oberflächen vergrößert. Dies führt zu einer erhöhten Reibung innerhalb des Wälzlagers zwischen den Laufflächen und den Wälzkörpern, einem erhöhten Reibungswiderstand und zu einer erhöhten Erwärmung sowie einem verstärkten Verschleiß des Wälzlagers. Ab einem bestimmten Grad des Verschleißes müssen Wälzlager repariert bzw. bei irreparablen Schäden am Wälzlager ausgetauscht werden.

Nach herkömmlichen Verfahren zur Reparatur von abgenutzten bzw. beschädigten Wälzlagern wird i.d.R. zunächst das Wälzlager zerlegt, das Schmiermittel entfernt und die Oberflächen der Laufflächen bzw. der Wälzkörper mechanisch nachbearbeitet, z.B durch polieren, um eine gewünschte Oberflächenrauheit zu erzielen. Anschließend wird das Wälzlager unter Verwendung frischen Schmiermittels wieder zusammengesetzt.

Beispielsweise ist aus der JP 2003 313 573 A ein Schmiermittel bekannt, welches Muskovit umfasst. Das Schmiermittel wird bei der Herstellung von Metallrohren eingesetzt. Bekannte Verfahren zur Reparatur von verschlissenen oder beschädigten Wälzlagern haben den Nachteil, dass insbesondere die mechanische Bearbeitung der Oberflächen sehr zeit- sowie kostenintensiv ist.

Es ist eine Aufgabe der vorliegenden Erfindung, ein Verfahren zur Herstellung sowie Reparatur von Wälzlagern derart zu verbessern, dass mechanische Fertigungsverfahren wie z.B. Honen zum Erzielen entsprechender Rauheiten der Oberflächen von Laufflächen sowie Oberflächen der Wälzkörper nicht erforderlich und somit Fertigungskosten reduzierbar sind.

Diese Aufgabe wird durch ein Wälzlager, ein Verfahren zur Herstellung von Wälzlagern und ein Verfahren zur Reparatur von Wälzlagern gemäß den unabhängigen Ansprüchen gelöst.

Ein Schmiermittel für ein Wälzlager umfasst ein herkömmliches Schmiermittel als Basisschmiermittel und mindestens ein erstes Additiv, wobei das erste Additiv Muskovit aufweist und das Schmiermittel einen Anteil an Muskovit aufweist, der zwischen 3% und 5% beträgt.

Muskovit ist ein Mineral aus der Mineralklasse der Silikate und hat die chemische Strukturformel:

**KAl₂(AlSi₃O₁₀)(OH,F)₂.**

Ein Muskovit aufweisendes Schmiermittel kann gegenüber herkömmlichen Schmiermitteln ohne Muskovit den Vorteil haben, dass während des Betriebs des Lagers Muskovit in Rillen und Furchen des Lagers, z.B. des Lagerrings, der Lagerscheibe oder des Wälzkörpers, eindringt und unter Einfluss der im Betrieb des Lagers auftretenden Betriebskräfte an diesen Stellen eine Bindung mit dem Lager eingeht und somit die Rillen und Furchen verschließt. Auf diese Weise sind mit einem erfindungsgemäßen Schmiermittel Oberflächenrauheiten im Lager ausgleichbar und somit Oberflächen mit einer derart geringen Rauheit erzielbar, die ansonsten nur durch Schleif- oder Honprozesse erzielbar sind. Durch Verwendung eines solchen Schmiermittels können daher derartige Schleif- bzw. Honprozesse eliminiert und somit Fertigungszeiten sowie Fertigungskosten erheblich reduziert werden.

Mit anderen Worten kann das Wälzlager vor der Zugabe des Schmiermittels Laufflächen und/oder Wälzkörper mit einem Mittenrauhwert Ra aufweisen, der mit herkömmlichen

Fräs- oder Drehverfahren erzielbar ist, und wobei durch Verwendung des Schmiermittels eine deutliche Verringerung des Mittenrauhwerts auf einen Wert erzielt wird, der etwa durch Schleifen oder Honen erzielbar ist.

Ein Ausführungsbeispiel eines Schmiermittels zeichnet sich durch besonders vorteilhafte EP-Eigenschaften (Extreme Pressure) sowie AW-Eigenschaften (Anti Wear) aus. Das Schmiermittel bildet auf den Metalloberflächen im Wälzlager chemische Schutzschichten, die unter extremem Druck (EP) abgeschert werden, wodurch ein Verschweißen der Metalloberflächen, das ansonsten bei hohen Drücken entstehen kann, verhindert wird. Ferner bildet das Schmiermittel auf den Metalloberflächen im Wälzlager physikalische Schutzschichten, die einen niedrigen Reibungskoeffizienten der Paarung von Wälzkörper und Laufflächen gewährleisten und somit den Verschleiß (AW) des Wälzlagers reduzieren.

Das Schmiermittel weist einen Anteil an Muskovit auf, der zwischen 3% und 5 % beträgt. Ein derartiges Schmiermittel kann bewirken, dass einerseits ausreichend Muskovit zur Glättung von Oberflächenrauheiten der Laufflächen sowie der Wälzkörper vorhanden ist und andererseits das Muskovit im Schmiermittel in einer Konzentration vorliegt, dass eine Schmierfunktion des Schmiermittels durch das Muskovit nicht oder nur marginal beeinflusst wird. Eine Unterdosierung des Muskovits könnte dazu führen, dass ein Teil der zu verschließenden Rillen bzw. Furchen der Laufflächen bzw. der Wälzkörper aus Mangel an Muskovit unverschlossen bleibt. Eine Überdosierung könnte zu einer erhöhten Reibung im Lager führen, da das Muskovit ähnlich wie kleine lose Verschmutzungspartikel wirken kann.

Unter anderem kann das Schmiermittel für den Einsatz in der Lebensmittelindustrie eingesetzt werden. Wälzlager finden in der Lebensmittelindustrie vielerorts Anwendung. Da eine Betriebsstörung, die zu einer Kontamination von Lebensmitteln durch ein Schmiermittel führt, z.B. aufgrund einer Undichtigkeit eines Lagers, nie ganz ausgeschlossen werden kann, sollten die verwendeten Schmiermittel eines Wälzlagers lebensmittelverträglich sein. Darüber hinaus müssen in der Lebensmittelindustrie eingesetzte Wälzlager i.d.R. eine lebenslange Schmierung aufweisen, d.h., dass ein Wälzlager eine Schmierung aufweisen muss, die bis zum Austausch des Wälzlagers einen bestimmungsgemäßen Betrieb des Wälzlagers gewährleistet, so dass zwischendurch kein Schmiermittelaustausch bzw. kein Nachschmieren erforderlich ist. Demnach sollten die eingesetzten Schmiermittel eine hohe Lebensdauer aufweisen. Aufgrund der Lebensmittelverträglichkeit sind herkömmlich Schmiermittel, die in der Lebensmittelindustrie eingesetzt werden, kaum additiviert, und haben somit einen geringen Verschleißschutz. Muskovit im Schmiermittel wirkt als lebensmittelverträgliches Hochdruckadditiv und ermöglicht dadurch einen höheren Verschleißschutz im Vergleich zu herkömmlichen Lebensmittel - Schmiermitteln und verlängert dadurch die Gebrauchsdauer des Lagers.

Des Weiteren wird die Aufgabe gemäß einigen Ausführungsbeispielen durch ein Wälzlager mit einer ersten Lauffläche, einer zweiten Lauffläche und mindestens einem zwischen der ersten Lauffläche und der zweiten Lauffläche angeordnetem Wälzkörper und einem Schmiermittel gelöst, wobei das Schmiermittel ein Ausführungsbeispiel eines Schmiermittels ist und somit Muskovit als Additiv aufweist.

Überdies wird die Aufgabe durch ein Verfahren zur Herstellung von Wälzlagern mit den Schritten: Herstellen von Lagerringen bzw. Lagerschalen mit Laufflächen sowie Wälzkörpern, wobei die Laufflächen und/oder Wälzkörper eine Oberfläche mit einem Mittenrauhwert Ra zwischen 1µm und 12,5µm aufweisen, Zusammenfügen der Lagerringe bzw. Lagerschalen mit den Wälzkörpern und Einbringen eines ersten Schmiermittels in das Wälzlager gelöst, wobei das erste Schmiermittel ein erfindungsgemäßes Schmiermittel ist und Muskovit als Additiv aufweist. Hierbei kann das Einbringen des ersten Schmiermittels vor und/oder nach dem Zusammenfügen des Wälzlagers erfolgen.

Ein derartiges Verfahren hat gegenüber herkömmlichen Verfahren zur Herstellung von Wälzlagern den Vorteil, dass durch mechanische Bearbeitungen nur Oberflächen gefertigt werden müssen, die einen Mittenrauhwert Ra zwischen 1µm und 12,5µm aufweisen. Derartige Oberflächen sind z.B. mit herkömmlichen Drehprozessen erzielbar. Schleifprozesse sind hierfür nicht erforderlich. Durch die Verwendung des Schmiermittels werden diese Oberflächenrauheiten, z.B. während des Betriebs des Wälzlagers, geglättet, so dass die hierbei erzielten Oberflächenrauhheiten etwa denen nach einem Schleif- oder Honprozess entsprechen und somit einen Mittenrauhwert zwischen ca. 0,01 und 0,4 µm aufweisen. Auf diese Weise werden die Fertigungszeit sowie Fertigungskosten reduziert.

Besonders bevorzugt erfolgt nach dem Einbringen des ersten Schmiermittels eine Inbetriebnahme des Lagers zur Aktivierung des ersten Schmiermittels. Aktivierung des ersten Schmiermittels bedeutet im Sinne der Erfindung, dass das erste Schmiermittel Bedingungen ausgesetzt wird, die zu einer chemischen und physikalischen Verbindung des Muskovits mit den entsprechenden Rillen bzw. Furchen der Laufflächen bzw. Wälzkörperoberfläche des Wälzlagers führt, beispielsweise durch rotieren des Lagers.

Anschließend kann das erste Schmiermittel optional im Wesentlichen durch ein zweites Schmiermittel ersetzt werden. Durch Austauschen des ersten Schmiermittels durch ein zweites Schmiermittel wird erreicht, dass das Wälzlager ausreichend Muskovit im Schmiermittel enthält, um in etwaig auftretende Beschädigungen der Oberflächen in Inneren des Wälzlagers einzudringen und durch chemische und physikalische Verbindung zu glätten.

Des Weiteren wird die Aufgabe durch ein Verfahren zur Reparatur von Wälzlagern mit verschlissenen Oberflächen der Laufflächen und/oder Wälzkörper, mit dem Schritt: Einbringen eines ersten Schmiermittels in das zu reparierende Wälzlager gelöst, wobei das das erste Schmiermittel ein erfindungsgemäßes Schmiermittel ist und somit Muskovit als Additiv aufweist. Ein solches Verfahren zur Reparatur von Wälzlagern hat gegenüber herkömmlichen Verfahren den Vorteil, dass mechanische Nachbearbeitungsschritte, z.B. polieren, entfallen und somit der Zeitaufwand für eine Reparatur sowie die Reparaturkosten erheblich reduziert werden.

Vorzugsweise wird vor dem Einbringen des ersten Schmiermittels das zu reparierende Wälzlager demontiert und gereinigt. Somit ist gewährleistet, dass altes Schmiermittel sowie in dem Lager vorhandener Abrieb und sonstige Fremdkörper aus dem Wälzlager entfernt werden, bevor das erste Schmiermittel eingebracht wird. Hierdurch wird die Qualität des reparierten Lagers weiter verbessert. Das Einbringen des ersten Schmiermittels kann erfindungsgemäß vor und/oder nach einem Zusammensetzen des Wälzlagers erfolgen.

Im Folgenden sollen die erfindungsgemäßen Verfahren anhand von Zeichnungen näher erläutert werden. In den Zeichnungen zeigt:
- Fig. 1: ein Ablaufdiagramm einer Ausführungsform des erfindungsgemäßen Verfahrens zur Herstellung eines Wälzlagers;
- Fig. 2: ein Ablaufdiagramm einer Ausführungsform des erfindungsgemäßen Verfahrens zur Reparatur eines Wälzlagers; und
- Fig. 3: eine schematische Darstellung der Wirkungsweise von Muskovit als Additiv eines Schmiermittels eines Wälzlagers.

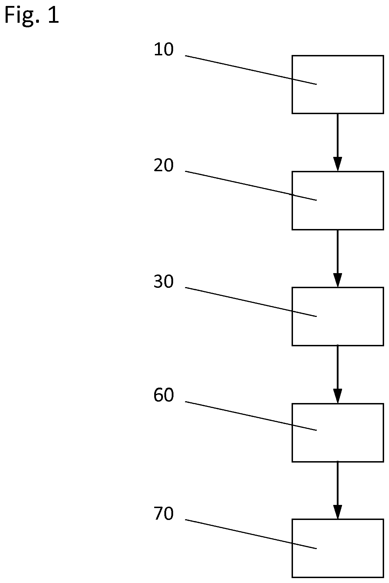

Fig. 1 zeigt ein Ablaufdiagramm einer Ausführungsform des erfindungsgemäßen Verfahrens zur Herstellung eines Wälzlagers. Im ersten Schritt, dem Herstellungsprozess 10, werden die einzelnen Komponenten des Wälzlagers, wie z.B. Lagerringe 1 bzw. Lagerschalen mit Laufflächen 2 sowie Wälzkörper 6 gefertigt bzw. bereitgestellt. Die Laufflächen 2 und/oder Oberflächen der Wälzkörper 6 weisen einen maximalen Mittenrauhwert von etwa 1 bis 12,5 µm auf. In speziellen Anwendungsfällen kann der maximale Mittenrauhwert auch etwas höher liegen.

Im zweiten Schritt, dem Montageprozess 20, werden die Komponenten des Wälzlagers zusammengesetzt. Das erste Schmiermittel 4, das Muskovit 5 als Additiv aufweist, kann sowohl während der Montage also auch im Schmierprozess in das Wälzlager in einen Bereich zwischen den Laufflächen 2, in dem die Wälzkörper 6 angeordnet sind, eingebracht werden.

In einem optionalen vierten Schritt, dem Inbetriebnahmeprozess 60, wird das Wälzlager in einen Betriebszustand versetzt, d.h. dass die Lagerringe bzw. -schalen relativ zueinander in Rotation versetzt werden. Ggf. wird hierbei eine weitere Last in das Wälzlager eingebracht, um die Belastung des Wälzlagers zu erhöhen. Ziel des Inbetriebnahmeprozesses 60 ist es, im Wälzlager einen Betriebszustand zu erreichen, bei dem das Muskovit 5 im Schmiermittel 4, das in Vertiefungen 3, wie z.B. Rillen und Furchen, der Laufflächen 2 bzw. der Oberfläche des Wälzkörpers 6 angeordnet ist, aktiviert wird und an diesen Stellen eine Bindung mit den Vertiefungen 3 eingeht und diese somit glättet.

In einem optionalen fünften Schritt, dem Austauschprozess 70, wird das erste Schmiermittel 4 aus dem Wälzlager entfernt und durch ein zweites Schmiermittel 4 ersetzt, das ebenfalls Muskovit 5 als Additiv enthält. In einem Ausführungsbeispiel ist ein Muskovitanteil des zweiten Schmiermittels geringer als ein Muskovitanteil des ersten Schmiermittels.

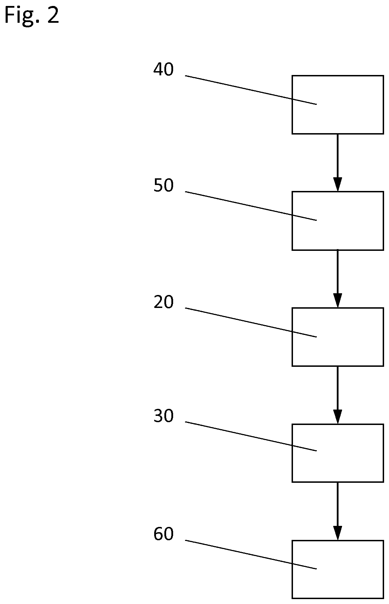

Fig. 2 zeigt ein Ablaufdiagramm einer Ausführungsform des erfindungsgemäßen Verfahrens zur Reparatur eines Wälzlagers. Zunächst wird das Wälzlager im Demontageprozess 40 zerlegt. Anschließend werden die einzelnen Komponenten des zerlegten Wälzlagers gesäubert 50. In einem folgenden Montageprozess 20 werden die gesäuberten Komponenten wieder zusammengesetzt. In einer bevorzugten Ausbildung des Verfahrens wird im Montageprozess 20 in einem gleichzeitig ablaufenden Schmierprozess 30 ein erstes Schmiermittel 4, das Muskovit 5 aufweist, in das Wälzlager eingebracht. Alternativ wird das erste Schmiermittel 4 nach dem Montageprozess 20 in einem Schmierprozess 30 in das Wälzlager eingebracht. In einem optionalen Inbetriebnahmeprozess 60 wird das reparierte Wälzlager, wie bereits zu Fig. 1 erläutert, in einen Betriebszustand versetzt. Ein in Fig. 2 nicht dargestellter, optionaler Austauschprozess 70, wie oben bereits zu Fig. 1 erläutert, kann erfindungsgemäß vorgesehen sein.

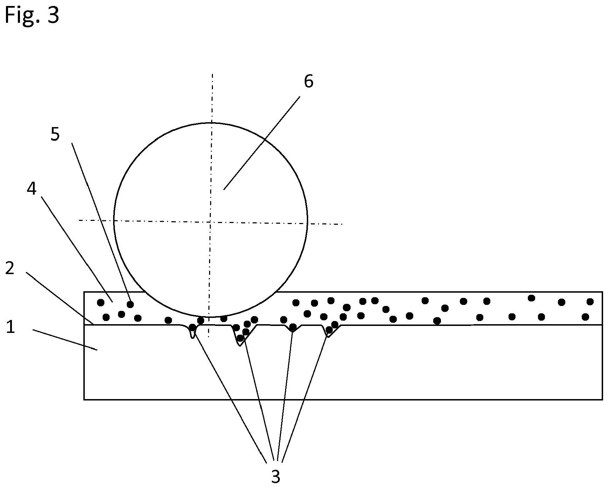

Die Wirkungsweise des Muskovits als Additiv zum Schmiermittel während des Betriebs bzw. des Inbetriebnahmeprozesses 60 des Wälzlagers ist in Fig. 3 schematisch dargestellt. Fig. 3 zeigt schematisch einen Ausschnitt eines Lagerrings 1 eines Wälzlagers. Der Lagerring 1 weist eine Lauffläche 2 mit einer Mehrzahl von Vertiefungen 3 auf, die z.B. als Rillen Furchen oder Löcher ausgebildet sind. Die Lauffläche 2 weist ein Schmiermittel 4 mit Muskovit 5 als Additiv auf. Während des Betriebs bzw. des Inbetriebnahmeprozesses 60 des Wälzlagers wird das Muskovit 5 von einem Wälzkörper 6, der z.B. als Kugel ausgebildet ist, in die Vertiefungen 3 gedrückt. Durch die beim Betrieb entstehenden Betriebskräfte reagiert das Muskovit 5 in den Vertiefungen 3 mit der Lauffläche 2 des Lagerrings 1 und und wird aktiviert. Hierbei verbindet sich das Muskovit 5 mit der Lauffläche 2 des Lagerrings 1, so dass die Vertiefungen 3 durch das Muskovit 5 geglättet werden.

### Bezugszeichenliste

- 1: Lagerring
- 2: Lauffläche
- 3: Vertiefungen
- 4: Schmiermittel
- 5: Muskovit
- 6: Wälzkörper
- 10: Herstellungsprozess
- 20: Montageprozess
- 30: Schmierprozess
- 40: Demontageprozess
- 50: Reinigungsprozess
- 60: Inbetriebnahmeprozess
- 70: Austauschprozess

## Patentansprüche

1. Wälzlager mit einer ersten Lauffläche, einer zweiten Lauffläche und mindestens einem zwischen der ersten Lauffläche und der zweiten Lauffläche angeordnetem Wälzkörper und einem Schmiermittel,
**wobei** das Schmiermittel ein herkömmliches Schmiermittel als Basisschmiermittel und mindestens ein erstes Additiv umfasst,
wobei das erste Additiv Muskovit aufweist, und
wobei das Schmiermittel einen Anteil an Muskovit aufweist, der zwischen 3% und 5% beträgt.

2. Wälzlager nach Anspruch 1,
**wobei** das Wälzlager zur Verwendung in der Lebensmittelindustrie ausgebildet ist und/oder **wobei** das Schmiermittel für den Einsatz in der Lebensmittelindustrie geeignet ist.

3. Verfahren zur Herstellung von Wälzlagern mit den Schritten:
- Herstellen von Lagerringen bzw. Lagerschalen mit Laufflächen sowie Wälzkörpern in einem Herstellungsprozess (10), wobei die Laufflächen und/oder Wälzkörper eine Oberfläche mit einem Mittenrauhwert zwischen 1µm und 12,5µm aufweisen;
- Zusammenfügen der Lagerringe bzw. Lagerschalen mit den Wälzkörpern in einem Montageprozess (20); und
- Einbringen eines ersten Schmiermittels in das Wälzlager in einem Schmierprozess (30),
**wobei** das erste Schmiermittel ein herkömmliches Schmiermittel als Basisschmiermittel und mindestens ein erstes Additiv umfasst,
wobei das erste Additiv Muskovit aufweist, und
wobei das Schmiermittel einen Anteil an Muskovit aufweist, der zwischen 3% und 5% beträgt.

4. Verfahren nach Anspruch 3, **wobei** das Schmiermittel für den Einsatz in der Lebensmittelindustrie geeignet ist.

5. Verfahren nach Anspruch 3 oder 4, **wobei** nach dem Einbringen des ersten Schmiermittels in dem Schmierprozess (30) eine Inbetriebnahme des Lagers zur Aktivierung des ersten Schmiermittels in einem Inbetriebnahmeprozess (60) erfolgt.

6. Verfahren nach Anspruch 5, wobei ferner das erste Schmiermittel im Wesentlichen durch ein zweites Schmiermittel in einem Austauschprozess (70) ersetzt wird.

7. Verfahren nach Anspruch 6, **wobei** das zweite Schmiermittel Muskovit als Additiv enthält.

8. Verfahren zur Reparatur von Wälzlagern mit verschlissenen Oberflächen der Laufflächen und/oder der Wälzkörper, mit dem Schritt:
- Einbringen eines ersten Schmiermittels in das zu reparierende Wälzlager in einem Schmierprozess (30),
**wobei** das erste Schmiermittel ein herkömmliches Schmiermittel als Basisschmiermittel und mindestens ein erstes Additiv umfasst,
wobei das erste Additiv Muskovit aufweist, und
wobei das Schmiermittel einen Anteil an Muskovit aufweist, der zwischen 3% und 5% beträgt.

9. Verfahren nach Anspruch 8, wobei das erste Schmiermittel für den Einsatz in der Lebensmittelindustrie geeignet ist.

## Claims

1. Rolling bearing with a first raceway, a second raceway and at least one rolling body, arranged between the first raceway and the second raceway, and a lubricant,
wherein the lubricant comprises a conventional lubricant as a basic lubricant and at least one first additive,
wherein the first additive includes muscovite, and wherein the lubricant includes a proportion of muscovite that is between 3% and 5%.

2. Rolling bearing according to Claim 1,
wherein the rolling bearing is designed for use in the food industry and/or wherein the lubricant is suitable for use in the food industry.

3. Method for producing rolling bearings with the steps of:
- producing bearing rings or bearing shells with raceways and also rolling bodies in a production process (10), wherein the raceways and/or rolling bodies have a surface with a minimum roughness value of between 1 µm and 12.5 pm;
- joining together the bearing rings or bearing shells with the rolling bodies in an assembly process (20); and
- introducing a first lubricant into the rolling bearing in a lubricating process (30),
wherein the first lubricant comprises a conventional lubricant as a basic lubricant and at least one first additive,
wherein the first additive includes muscovite, and wherein the lubricant includes a proportion of muscovite that is between 3% and 5%.

4. Method according to Claim 3, wherein the lubricant is suitable for use in the food industry.

5. Method according to Claim 3 or 4, wherein, after introducing the first lubricant in the lubricating process (30), initial operation of the bearing to activate the first lubricant is performed in an initial operating process (60).

6. Method according to Claim 5, wherein furthermore the first lubricant is substantially replaced by a second lubricant in an exchange process (70).

7. Method according to Claim 6, wherein the second lubricant contains muscovite as an additive.

8. Method for repairing rolling bearings with worn surfaces of the raceways and/or of the rolling bodies, with the step of:
- introducing a first lubricant into the rolling bearing to be repaired in a lubricating process (30),
wherein the first lubricant comprises a conventional lubricant as a basic lubricant and at least one first additive,
wherein the first additive includes muscovite, and wherein the lubricant includes a proportion of muscovite that is between 3% and 5%.

9. Method according to Claim 8, wherein the first lubricant is suitable for use in the food industry.

## Revendications

1. Palier à roulement pourvu d'une première surface de roulement, d'une deuxième surface de roulement et d'au moins un élément de roulement disposé entre la première surface de roulement et la deuxième surface de roulement et d'un lubrifiant,
le lubrifiant comprenant un lubrifiant classique utilisé comme lubrifiant de base et au moins un premier additif,
le premier additif comprenant de la muscovite, et
le lubrifiant ayant une teneur en muscovite comprise entre 3 % et 5 %.

2. Palier à roulement selon la revendication 1,
le palier à roulement étant adapté pour être utilisé dans l'industrie alimentaire et/ou le lubrifiant étant adapté pour être utilisé dans l'industrie alimentaire.

3. Procédé de fabrication de paliers à roulement comprenant les étapes suivantes :
- fabrication des bagues de palier ou des coquilles de palier pourvues de surfaces de roulement et d'éléments de roulement dans un processus de fabrication (10), les surfaces de roulement et/ou les éléments de roulement ayant une surface présentant une valeur de rugosité moyenne comprise entre 1 µm et 12,5 µm ;
- assemblage des bagues de palier ou des coquilles de palier avec les éléments de roulement dans un processus de montage (20) ; et
- introduction d'un premier lubrifiant dans le palier de roulement dans un processus de lubrification (30),
le premier lubrifiant comprenant un lubrifiant classique utilisé comme lubrifiant de base et au moins un premier additif,
le premier additif comprenant de la muscovite, et
le lubrifiant ayant une teneur en muscovite comprise entre 3 % et 5 %.

4. Procédé selon la revendication 3, le lubrifiant étant adapté pour être utilisé dans l'industrie alimentaire.

5. Procédé selon la revendication 3 ou 4, une mise en service du palier à roulement étant effectuée après avoir introduit le premier lubrifiant dans le processus de lubrification (30) pour activer le premier lubrifiant dans un processus de mise en service (60).

6. Procédé selon la revendication 5, le premier lubrifiant étant en outre remplacé sensiblement par un deuxième lubrifiant dans un processus d'échange (70).

7. Procédé selon la revendication 6, le deuxième lubrifiant contenant de la muscovite comme additif.

8. Procédé de réparation de paliers à roulement dont les surfaces de roulement et/ou les éléments de roulement présentent des surfaces usées, le procédé comprenant l'étape suivante :
- introduction d'un premier lubrifiant dans le palier à roulement à réparer dans un processus de lubrification (30),
le premier lubrifiant comprenant un lubrifiant classique utilisé comme lubrifiant de base et au moins un premier additif,
le premier additif comprenant de la muscovite, et
le lubrifiant ayant une teneur en muscovite comprise entre 3 % et 5 %.

9. Procédé selon la revendication 8, dans lequel le premier lubrifiant est adapté pour être utilisé dans l'industrie alimentaire.
